# EUROPEAN PATENT APPLICATION

(11) **EP 4 822 310 A1**
(43) Date of publication of application: **14.10.2026**
(21) Application number: 25774738.6
(22) Date of filing: 14.03.2025
(51) Int. Cl.: G01J 3/02, G01J 3/18, G01N 21/84, G01J 3/28

(54) **INTEGRATED MODULAR SPECTROSCOPIC SYSTEM AND PROCESS DIAGNOSIS METHOD USING SAME**

(30) Priority: 21.03.2024 KR 20240039081
(71) Applicant: Korea Institute of Machinery & Materials, Daejeon 34103 (KR)
(72) Inventor: LEE, Jinyoung, Daejeon 34116 (KR); KANG, Wooseok, Daejeon 34083 (KR); HUR, Min, Daejeon 34049 (KR); KIM, Daewoong, Seoul 06603 (KR)
(74) Representative: Lewis Silkin LLP
(86) International application number: PCT/KR2025/003340
(87) International publication number: WO 2025/198265

(57) **Abstract**

In an integrated modular spectroscopy system and a method for process diagnosis using the integrated modular spectroscopy system, the spectroscopy system includes a spectroscopy module, a detection unit, and a diagnosis unit. The spectroscopy module receives an optical signal emitted from a plasma process. The detection unit detects an optical signal according to a frequency band based on the optical signal received by the spectroscopy module. The diagnosis unit determines a state of the plasma process or determines a calibration timing of the spectroscopy module based on the detected optical signal. In this case, the spectroscopy module includes a first spectrometer configured to receive an optical signal of a first wavelength band by performing diffraction spectroscopy, and a second spectrometer configured to receive an optical signal of a second wavelength band by performing transmission spectroscopy.

## Description

### BACKGROUND

### 1. Field of Disclosure

The present invention relates to an integrated modular spectroscopy system and a method for process diagnosis using the integrated modular spectroscopy system, and more particularly, to an integrated modular spectroscopy system and a method for process diagnosis using the integrated modular spectroscopy system, which diagnose a progress state of a process, an abnormality of the process, a replacement timing of a spectrometer, or contamination of a window in a process using plasma, by using an integrated modular spectrometer in which a diffraction-based spectrometer and a transmission-based spectrometer are integrated.

### 2. Description of Related Technology

In general, in semiconductor or display manufacturing processes using plasma, information on changes in characteristics of atoms, molecules, ions, or electrons in a corresponding manufacturing process may be acquired based on optical signals emitted during the process. In addition, based on such acquired information, an end state of the corresponding manufacturing process may be determined.

Optical signals emitted in such manufacturing processes are mainly detected using a spectrometer, and a representative spectrometer is a Czerny-Turner type spectrometer as described in Korean Laid-open Publication No. 10-2023-0058376.

That is, through the Czerny-Turner type spectrometer, an optical signal emitted during a process is introduced into a diffraction spectrometer through an optical fiber, diffracted by a grating, and intensities corresponding to respective wavelengths formed on a CCD array may be measured.

However, in the case of such a diffraction-based spectrometer, the same wavelength resolution is provided over an entire observation wavelength range, and there is a limitation in improving sensitivity. In addition, depending on a change in arrangement of individual components constituting the spectrometer, wavelength resolution or sensitivity may vary, and in particular, there is a problem in that misalignment of an optical path occurs due to vibration or temperature change in a manufacturing facility or an error is caused due to a change in optical properties.

### SUMMARY

The present invention is developed to solve the above-mentioned problems of the related arts. The present invention provides an integrated modular spectroscopy system capable of effectively diagnosing a progress state of various processes, an abnormality of a process, a replacement timing of a spectrometer, or contamination of a window in a process using plasma, by using an integrated modular spectrometer in which a diffraction-based spectrometer and a transmission-based spectrometer are integrated.

In addition, the present invention also provides a method for process diagnosis using the integrated modular spectroscopy system.

According to an example embodiment, the spectroscopy system includes a spectroscopy module, a detection unit, and a diagnosis unit. The spectroscopy module receives an optical signal emitted from a plasma process. The detection unit detects an optical signal according to a frequency band based on the optical signal received by the spectroscopy module. The diagnosis unit determines a state of the plasma process or determines a calibration timing of the spectroscopy module based on the detected optical signal. In this case, the spectroscopy module includes a first spectrometer configured to receive an optical signal of a first wavelength band by performing diffraction spectroscopy, and a second spectrometer configured to receive an optical signal of a second wavelength band by performing transmission spectroscopy.

In an example embodiment, the optical signal of the first wavelength band may be an optical signal in ultraviolet (UV), visible (VIS), and infrared (IR) wavelength bands, and the optical signal of the second wavelength band may be an optical signal in ultraviolet (UV) and visible (VIS) wavelength bands.

In an example embodiment, the detection unit may include a first optical signal detection unit configured to detect optical signals in ultraviolet, visible, and infrared wavelength bands received from the first spectrometer, and optical signals in ultraviolet and visible wavelength bands received from the second spectrometer.

In an example embodiment, the diagnosis unit may include a process determination unit configured to determine an end timing of the plasma process based on optical signals detected by the first optical signal detection unit.

In an example embodiment, the second spectrometer may further include a filter unit configured to selectively transmit only wavelengths of a specific band belonging to the ultraviolet (UV) and visible (VIS) wavelength bands.

In an example embodiment, the detection unit may include a second optical signal detection unit configured to detect whether optical signals in ultraviolet and visible wavelength bands received from the first spectrometer are shifted relative to optical signals in ultraviolet and visible wavelength bands received from the second spectrometer.

In an example embodiment, the diagnosis unit may include a calibration determination unit configured to determine an alignment calibration timing of the first spectrometer based on a shift state of optical signals detected by the second optical signal detection unit.

In an example embodiment, the spectroscopy system may further include a window disposed between a process chamber in which the plasma process is performed and the spectroscopy module, through which the optical signal emitted from the plasma process is transmitted.

In an example embodiment, the detection unit may include a third optical signal detection unit configured to detect transmittance of optical signals in ultraviolet and visible wavelength bands received from the first spectrometer and transmittance of optical signals in ultraviolet and visible wavelength bands received from the second spectrometer.

In an example embodiment, the diagnosis unit may include a replacement determination unit configured to determine a replacement timing of the window based on transmittance of optical signals detected by the third optical signal detection unit.

In an example embodiment, the first spectrometer may receive the optical signal through an optical fiber, and the second spectrometer may receive the optical signal through the window.

In an example embodiment, by comparing a difference between transmittance of the optical signal received from the first spectrometer and transmittance of the optical signal received from the second spectrometer, a replacement timing of the optical fiber or a replacement timing of the window may be determined.

According to another example embodiment, in the method for process diagnosis, an optical signal emitted from a plasma process is received through a spectroscopy module. An optical signal according to a frequency band is detected based on the received optical signal. A state of the plasma process or a calibration timing of the spectroscopy module is determined based on the detected optical signal. The spectroscopy module includes a first spectrometer configured to receive an optical signal of a first wavelength band by performing diffraction spectroscopy, and a second spectrometer configured to receive an optical signal of a second wavelength band by performing transmission spectroscopy.

In an example embodiment, in the determining the state of the plasma process, an end timing of the plasma process may be determined based on optical signals for respective wavelength bands of the detected optical signal.

In an example embodiment, the detected optical signal may include optical signals in ultraviolet, visible, and infrared wavelength bands received from the first spectrometer, and optical signals in ultraviolet and visible wavelength bands received from the second spectrometer.

In an example embodiment, in the determining the calibration timing of the spectroscopy module, an alignment calibration timing of the first spectrometer may be determined based on a state in which an optical signal received from the first spectrometer is shifted relative to an optical signal received from the second spectrometer.

In an example embodiment, the optical signals received from the first spectrometer and the second spectrometer may be optical signals in ultraviolet and visible wavelength bands.

In an example embodiment, the optical signal may be received by the spectroscopy module through a window, and a replacement timing of the window may be determined based on transmittance of an optical signal received from the first spectrometer and transmittance of an optical signal received from the second spectrometer.

In an example embodiment, the transmittance of the optical signals received from the first spectrometer and the second spectrometer may be transmittance of optical signals in visible and ultraviolet wavelength bands.

According to the present example embodiments, by simultaneously using a first spectrometer that performs diffraction spectroscopy and a second spectrometer that performs transmission spectroscopy, optical signals may be detected using the first spectrometer in a visible (VIS) to infrared (IR) wavelength band, and optical signals may be detected using the second spectrometer in an ultraviolet (UV) to visible (VIS) wavelength band, thereby enabling detection of optical signals over an entire band with high sensitivity and reliability.

Accordingly, it is possible to overcome a limitation in resolution of the first spectrometer in a region in which adjacent optical signals are present, such as an ultraviolet band or metal atom emission signals, and thus more accurate and reliable spectroscopic detection of optical signals may be achieved.

In particular, the second spectrometer may include a filter unit capable of transmitting only wavelengths of a specific band, thereby selectively acquiring optical signals in a specific wavelength band to be monitored.

Accordingly, through spectroscopic detection of optical signals over the entire band as described above as well as detection of optical signals in a specific wavelength band, an end timing of a plasma process may be determined more accurately and with higher reliability.

In addition, since the first spectrometer has a tendency in which a wavelength is shifted due to the presence of an alignment error, when a wavelength of an optical signal received through the first spectrometer is relatively largely shifted with respect to a specific wavelength band commonly observable by the first spectrometer and the second spectrometer, it may be determined as a calibration timing of the first spectrometer, and calibration of the spectroscopy module may be performed.

Furthermore, when a plasma emission optical signal is received through a window, transmittance of the received optical signal decreases due to contamination of the window, and since such a decrease in transmittance of the optical signal occurs in common in both the first spectrometer and the second spectrometer, a replacement timing of the window may be determined by monitoring the same.

Accordingly, in monitoring a plasma process state, not only accurate determination of an end timing of the process but also information on an alignment state of the spectroscopy module and a contamination state of the window may be simultaneously monitored, thereby further improving accuracy and reliability of determination of the end timing of the process.

### BRIEF DESCRIPTION OF THE DRAWINGS

FIG. 1A is a graph illustrating main emission optical signals in transition processes for respective energy regions of argon, and FIG. 1B is a graph illustrating main emission optical signals of tungsten;
FIG. 2 is a block diagram illustrating an integrated modular spectroscopy system according to an example embodiment of the present invention;
FIG. 3 is a flowchart illustrating a method for process diagnosis using the spectroscopy system of FIG. 2;
FIG. 4 is a graph illustrating an optical signal spectrum capable of being monitored using the spectroscopy module of FIG. 2:
FIG. 5A and FIG. 5B are graphs illustrating results of spectrally separating adjacent wavelength signals using the spectroscopy module of FIG. 2;
FIG. 6A and FIG. 6B are graphs illustrating a state in which wavelength signals change when a flow rate of silane (SiH₄) gas is varied, through spectroscopy using the spectroscopy module of FIG. 2;
FIG. 7A and FIG. 7B are schematic diagrams for explaining a wavelength shift state of an optical signal according to an alignment error of the first spectrometer of FIG. 2; and
FIG. 8A is a graph illustrating a change in transmittance for each wavelength according to contamination of a window of FIG. 2, and FIG. 8B is a graph for explaining a replacement timing of the window according to a change in sensitivity of the spectroscopy module of FIG. 2.

### <Reference numerals>

| | | | |
|---|---|---|---|
| 10 : | integrated modular spectroscopy system | 20 : | plasma emission optical signal |
| 30 : | window | 100 : | spectroscopy module |
| 110 : | first spectrometer | 120 : | second spectrometer |
| 130 : | filter unit | 200 : | detection unit |
| 210 : | first optical signal detection unit | 220 : | second optical signal detection unit |
| 230 : | third optical signal detection unit | 300 : | diagnosis unit |
| 310 : | process determination unit | 320 : | calibration determination unit |
| 330 : | replacement determination unit | | |

### DETAILED DESCRIPTION

The present invention may be subject to various modifications and may have various forms, and therefore example embodiments will be described in detail herein. However, this is not intended to limit the present invention to the specific disclosed forms, and it should be understood that the present invention includes all modifications, equivalents, and substitutes included within the spirit and technical scope of the present invention. In describing the drawings, like reference numerals are used for like elements. Terms such as first and second may be used to describe various elements, but the elements should not be limited by these terms. The terms are used only for the purpose of distinguishing one element from another element.

The terminology used herein is for the purpose of describing particular example embodiments only and is not intended to limit the present invention. Singular expressions include plural expressions unless the context clearly indicates otherwise.

In the present application, terms such as "include" or "consist of" are intended to specify the presence of stated features, numbers, steps, operations, elements, components, or combinations thereof, but should not be understood as precluding the presence or addition of one or more other features, numbers, steps, operations, elements, components, or combinations thereof.

Unless otherwise defined, all terms used herein, including technical and scientific terms, have the same meanings as those generally understood by one of ordinary skill in the art to which the present invention pertains. Terms defined in commonly used dictionaries should be interpreted as having meanings consistent with their meanings in the context of the related art and should not be interpreted in an idealized or overly formal sense unless expressly so defined herein.

Hereinafter, the invention is described more fully hereinafter with reference to the accompanying drawings, in which embodiments of the invention are shown.

First, prior to describing example embodiments of the present invention, frequency bands of optical signals emitted according to types of gases or metals used in processes such as semiconductor or display manufacturing processes using plasma will be exemplified, and a required wavelength resolution will be described.

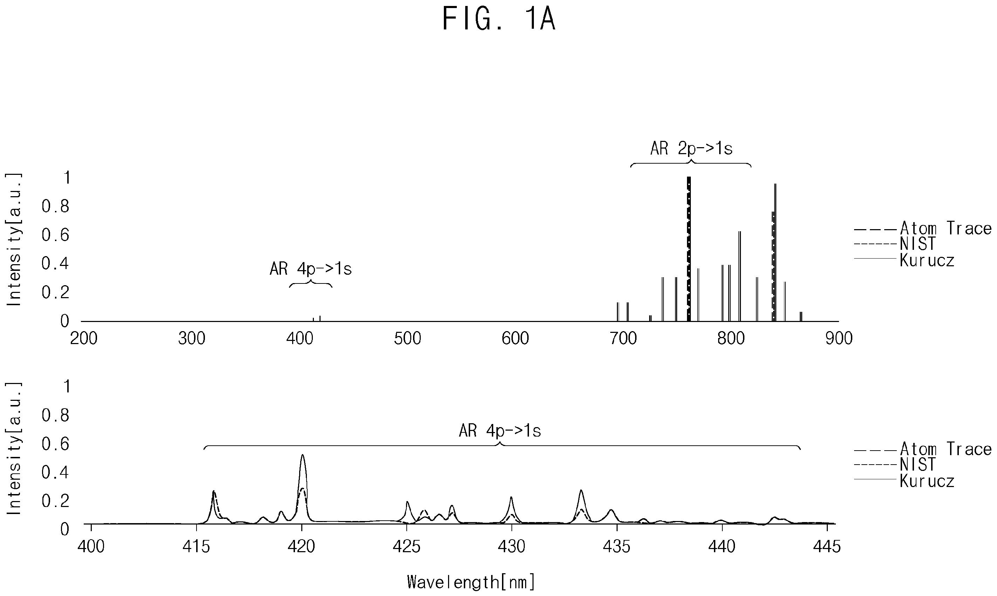

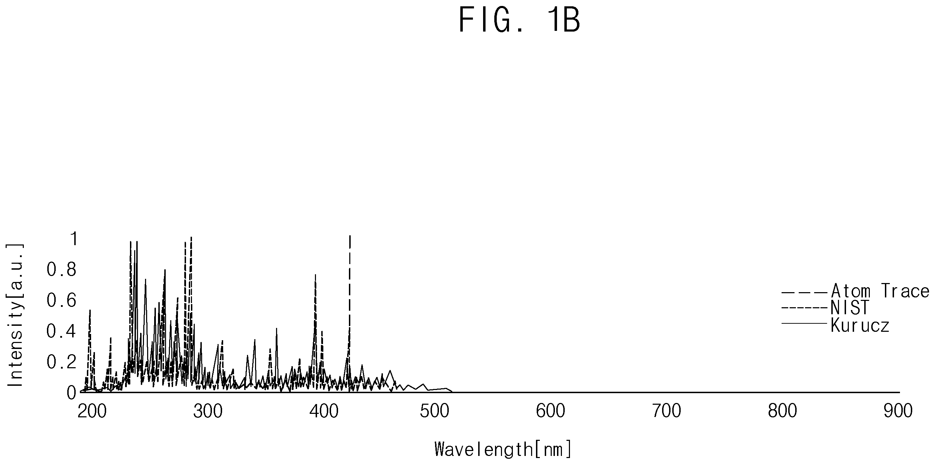

FIG. 1A is a graph illustrating main emission optical signals in transition processes for respective energy regions of argon, and FIG. 1B is a graph illustrating main emission optical signals of tungsten.

Referring to FIG. 1A, a main emission optical signal band of argon (Ar), which is widely used as an inert gas in semiconductor or display manufacturing processes, is illustrated.

That is, in the case of argon, for optical signals emitted in a transition process (2p→1s, where s and p are energy sub-levels) in a relatively low energy region (for example, a wavelength of 750.4 nm), intervals of 10 nm or more exist between individual optical signals, whereas for optical signals emitted in a transition process (4p→1s) in a relatively high energy region (for example, a wavelength of 425.9 nm), intervals of 1 nm or more exist between individual optical signals, thereby confirming that a relatively very high wavelength resolution is required.

In addition, referring to FIG. 1B, a main emission optical signal band of tungsten (W), which is widely used in metal deposition or etching processes in semiconductor or display manufacturing processes, is illustrated.

That is, even in the case of a metal such as tungsten, it may be confirmed that an orbital of an outermost electron is a d orbital, and a plurality of energy levels adjacent to an energy level of a transitioned electron exist.

Furthermore, in terms of an intensity of an optical signal, in order to generate an optical signal having an energy level in a relatively high excitation state, collision with high-energy electrons is essential. However, in plasma of a general semiconductor or display manufacturing process, a probability of existence of high-energy electrons decreases exponentially, and thus, particularly in order to measure an emission optical signal in an ultraviolet (UV) band, relatively very high wavelength resolution and high sensitivity are required.

Accordingly, according to example embodiments of the present invention, while selectively detecting emission optical signals particularly in the ultraviolet band, detection is also performed for other optical signal bands outside the ultraviolet band, thereby making it possible to provide a spectroscopy system having high wavelength resolution and high sensitivity for each detection band.

Hereinafter, example embodiments of the present invention will be described in detail.

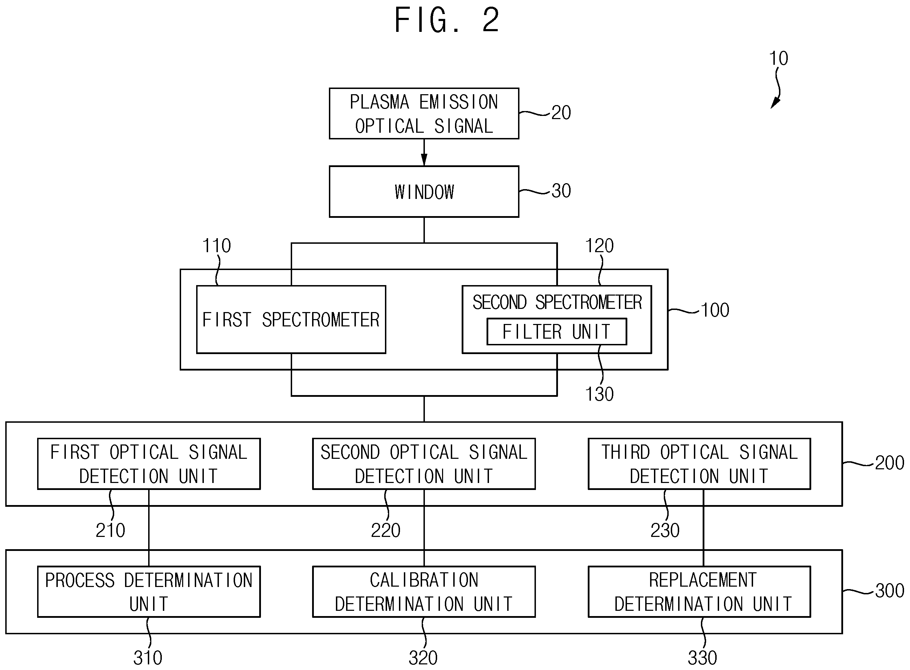

FIG. 2 is a block diagram illustrating an integrated modular spectroscopy system according to an example embodiment of the present invention.

Referring to FIG. 2, the integrated modular spectroscopy system 10 (hereinafter, referred to as a spectroscopy system) according to the present example embodiment includes a spectroscopy module 100, a detection unit 200, and a diagnosis unit 300. In this case, the spectroscopy module 100 includes a first spectrometer 110 and a second spectrometer 120, the detection unit 200 includes first to third optical signal detection units 210, 220, and 230, and the diagnosis unit 300 includes a process determination unit 310, a calibration determination unit 320, and a replacement determination unit 330.

Here, the first spectrometer 110 is a diffraction spectrometer, and the second spectrometer 120 is a transmission spectrometer.

As described above, the spectroscopy system 10 performs spectroscopy on an optical signal emitted from a process using plasma, such as a semiconductor or display manufacturing process, that is, a plasma emission optical signal 20, thereby performing monitoring related to a plasma process. In this case, a detailed example process is not limited to a semiconductor process or a display process, and is not limited as long as plasma is used in various processes.

In addition, in the case of the spectroscopy system 10, the plasma emission optical signal 20 is generally received through a window 30 of a process chamber in which the plasma process is performed. The window 30 may be installed in advance on the process chamber, or may be installed in the process chamber as a component included in the spectroscopy system 10.

In this case, both when the window 30 is installed in advance in the process chamber and when it is installed together with installation of the spectroscopy system 10, monitoring of a state of the window 30 may be performed through the spectroscopy system 10, as will be described below.

Meanwhile, for convenience of description, detailed descriptions of detailed components of the spectroscopy system 10 will be described together through a method for process diagnosis using the spectroscopy system 10 described below.

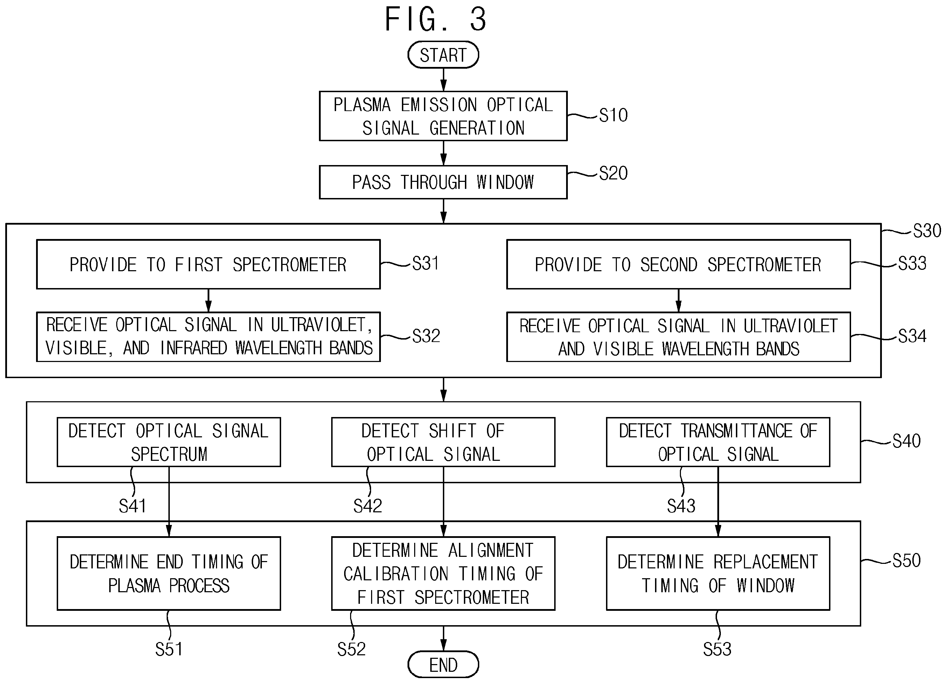

FIG. 3 is a flowchart illustrating a method for process diagnosis using the spectroscopy system of FIG. 2.

Referring to FIG. 2 and FIG. 3, in the method for process diagnosis using the spectroscopy system 10, first, a plasma emission optical signal 20 is generated through the plasma process (S10), and the generated plasma emission optical signal 20 is provided to the spectroscopy system 10 through the window 30 (S20).

Thereafter, referring to FIG. 2 and FIG. 3, in the spectroscopy system 10, the spectroscopy module 100 receives the optical signal 20 provided through the window 30 and monitors the optical signal 20 (S30).

Specifically, the spectroscopy module 100 includes the first spectrometer 110 and the second spectrometer 120, and the received optical signal 20 is provided to both the first spectrometer 110 and the second spectrometer 120 (S31 and S33).

The first spectrometer 110 receives the optical signal of a first wavelength band by diffractively dispersing the received optical signal 20.

The first spectrometer 110 is a diffraction spectrometer, in which an optical signal is introduced through an optical fiber, diffractively dispersed through a grating, and intensities corresponding to respective wavelengths formed on a CCD array are measured. In this case, arrangements or structures of components constituting the first spectrometer 110, such as a reflective mirror, a grating, or a CCD array, may be variously designed, and are not limited to a specific structure, and any conventional diffraction spectrometer may be applied.

In this case, the optical signal of the first wavelength band may be an optical signal in an ultraviolet (UV), visible (VIS), or infrared (IR) wavelength band.

That is, through the first spectrometer 110, optical signals in the ultraviolet (UV), visible (VIS), and infrared (IR) wavelength bands, which correspond to the optical signal of the first wavelength band, are received (S32). Meanwhile, the infrared wavelength band included in the optical signal of the first wavelength band may be, in a narrower range, a near-infrared (NIR) wavelength band in a range of 750 nm to 1,000 nm.

In contrast, the second spectrometer 120 receives an optical signal of a second wavelength band by transmissively dispersing the received optical signal 20.

The second spectrometer 120 is a transmission spectrometer, in which only an optical signal in a specific wavelength band is transmitted from the optical signal and an intensity in the transmitted wavelength band is measured. In this case, the second spectrometer 120 may include a filter unit 130 configured to selectively transmit only an optical signal in a specific wavelength band. In addition, the filter unit 130 may be selectively mounted to transmit only a specific wavelength band. Meanwhile, the filter unit 130 may include at least one filter, and each filter selectively transmits only an optical signal in a specific wavelength band, such that the filter unit 130 as a whole may selectively transmit an optical signal in a required wavelength range.

The optical signal of the second wavelength band may be, for example, an optical signal in an ultraviolet (UV) and visible (VIS) wavelength band. However, through the filter unit 130, only an optical signal in a specific wavelength range among the ultraviolet (UV) and visible (VIS) wavelength bands may be selectively transmitted.

That is, the filter unit 130 of the second spectrometer 120 may generally be configured to transmit only an optical signal in the ultraviolet (UV) and visible (VIS) wavelength bands, but may also be configured to selectively transmit only an optical signal in a narrower wavelength band.

This is because, as described above, the first spectrometer has a limitation in wavelength resolution according to adjacent optical signals, particularly in the ultraviolet wavelength band, and thus it is intended to overcome this limitation and perform spectroscopy of an optical signal with high sensitivity.

Accordingly, through the second spectrometer 120, as the optical signal of the second wavelength band, an optical signal in the ultraviolet (UV) and visible (VIS) wavelength bands may be received, or an optical signal in a narrower wavelength band selectively from among the ultraviolet and visible wavelength bands may be received (S34).

That is, through the second spectrometer 120, an optical signal in the visible (VIS) wavelength band may also be transmitted together to measure an intensity in the corresponding wavelength band (S34). However, a case in which the second spectrometer 120 transmits the optical signal in the visible (VIS) wavelength band together with the optical signal in the ultraviolet wavelength band may be more effectively used particularly for determining a replacement timing of the window 30, as will be described below.

As described above, the spectroscopy module 100 receives optical signals through the first spectrometer 110 and the second spectrometer 120, and examples of the received optical signals will be described below.

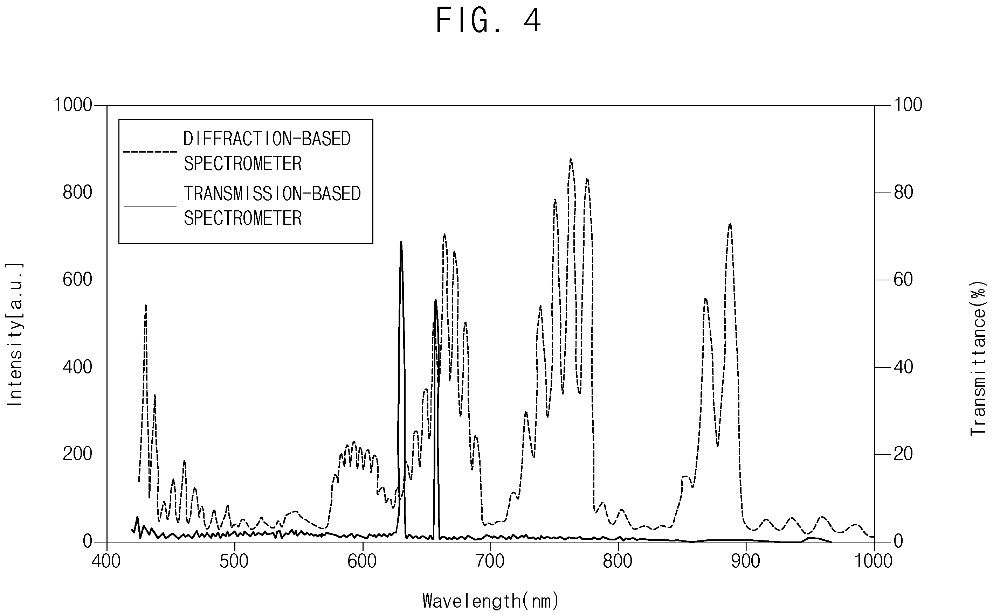

FIG. 4 is a graph illustrating an optical signal spectrum capable of being monitored using the spectroscopy module of FIG. 2.

That is, FIG. 4 illustrates an example of signals received through the first spectrometer 110 and the second spectrometer 120 with respect to a hydrogen chloride/nitrogen/ammonia (SiH4/N2/NH3) plasma emission optical signal.

As may be confirmed from FIG. 4, in the case of the first spectrometer 110, simultaneous monitoring of a plurality of emission optical signals is possible over an entire illustrated wavelength band (400 nm to 1,000 nm).

In contrast, in the case of the second spectrometer 120, it may be confirmed that monitoring of only a small number of emission optical signals is selectively possible only for a specific wavelength band (around 630 nm or around 650 nm). In this case, FIG. 4 is only for confirming monitoring characteristics of emission optical signals according to a type of spectrometer with respect to a predetermined wavelength range (400 nm to 1,000 nm), and as described above, in the present example embodiment, the second spectrometer 120 mainly monitors emission optical signals in a visible (VIS) and ultraviolet (UV) wavelength band, which is the second wavelength band.

Furthermore, when the filter unit 130 in the second spectrometer 120 includes an ultra-narrow band filter, effective spectroscopy with respect to adjacent wavelength signals may be implemented for a narrower wavelength band.

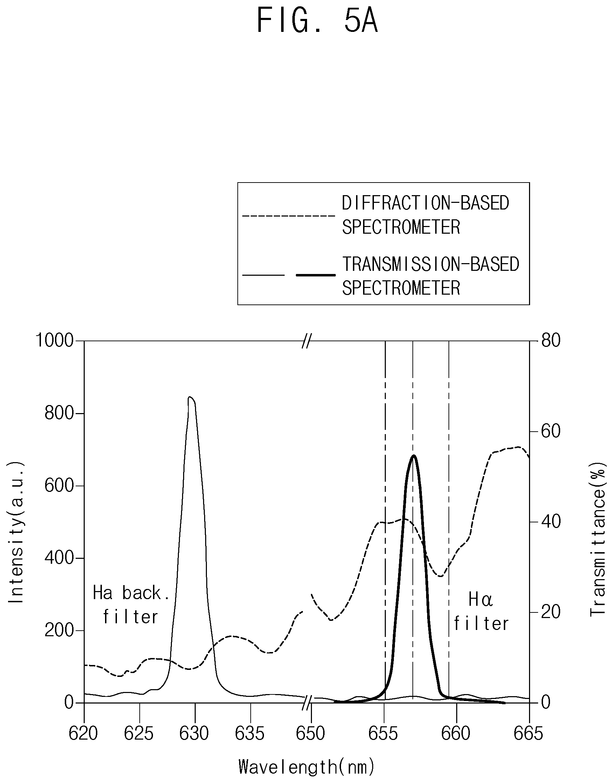

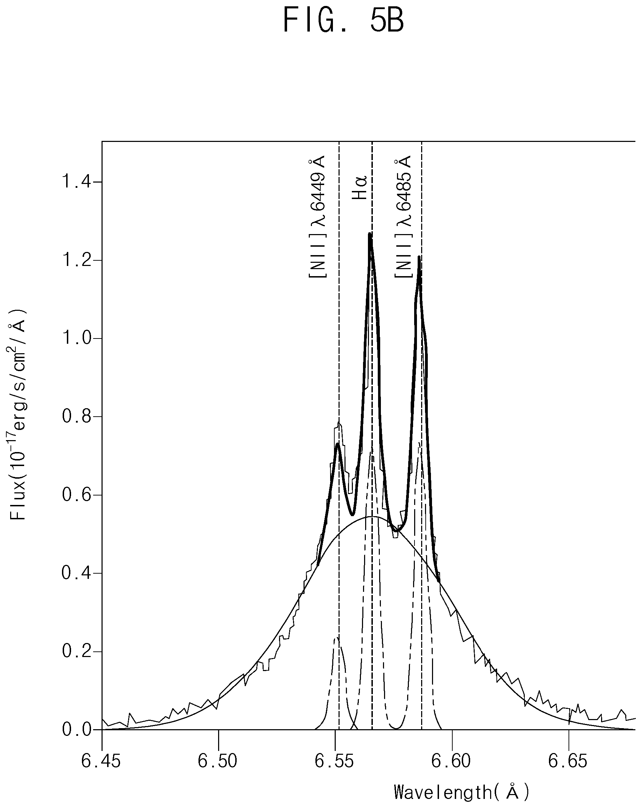

In this regard, FIG. 5A and FIG. 5B are graphs illustrating results of spectrally separating adjacent wavelength signals using the spectroscopy module of FIG. 2.

That is, referring to FIG. 5A and FIG. 5B, for example, as a result of spectroscopy performed through the spectroscopy module 100 with respect to a plasma emission optical signal in which hydrogen and nitrogen coexist, it may be confirmed that, similarly, through the first spectrometer 110, simultaneous monitoring of a plurality of emission optical signals is possible over an entire illustrated wavelength band (620 nm to 665 nm).

In contrast, in the case of the second spectrometer 120, by applying the filter unit 130 configured to transmit only specific wavelengths, monitoring of only a small number of emission optical signals may be selectively performed only for a specific wavelength band (a band of 625 nm to 635 nm or a band of 655 nm to 660 nm).

However, when the filter unit 130 is configured as an ultra-narrow band filter that transmits only an H-alpha wavelength band, as illustrated in FIG. 5B, it may be confirmed that, with respect to a signal of the H-alpha wavelength band (656.4 nm), accurate and effective spectroscopy is possible even with respect to adjacent wavelength signals, that is, nitrogen (N) signals (654.9 nm and 658.5 nm).

Accordingly, by selecting the filter unit 130 applied to the second spectrometer 120 to measure only a signal in a wavelength band of interest, effective spectroscopy may be achieved even for very closely adjacent signals.

As described above, the spectroscopy module 100 may perform spectroscopy by simultaneously using the first spectrometer 110 and the second spectrometer 120, receiving optical signals over an entire wavelength band, and at the same time selectively receiving only optical signals in a specific wavelength band of a relatively very narrow region.

However, the above-described example is for explaining characteristics of the second spectrometer 120, and as described above, since high wavelength resolution and sensitivity are required particularly to measure emission optical signals in an ultraviolet wavelength band, in the present example embodiment, the second spectrometer 120 mainly receives and spectrally processes optical signals in the ultraviolet wavelength band. Of course, it is also possible to receive and spectrally process optical signals in a visible wavelength band, as already described above.

Furthermore, in the present example embodiment, the second spectrometer 120 may also measure a change in emission signal intensity relatively accurately.

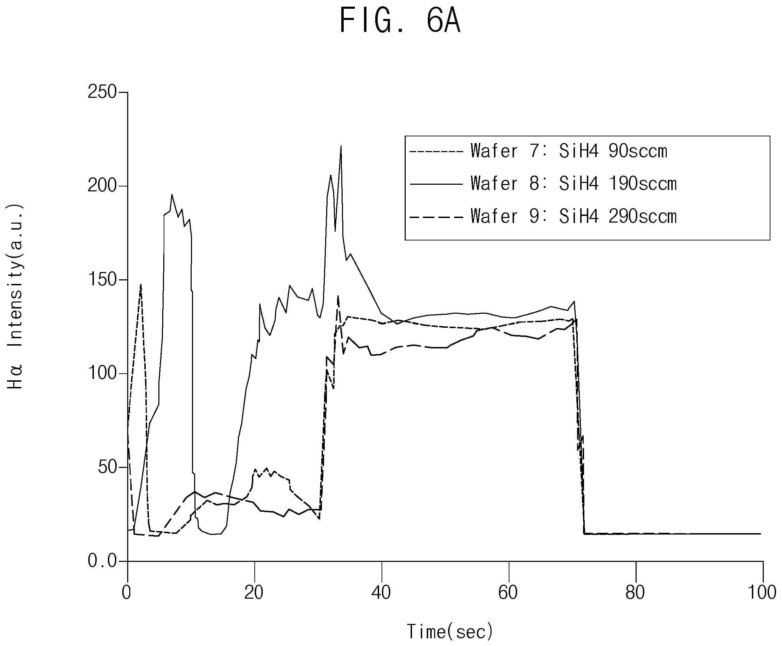

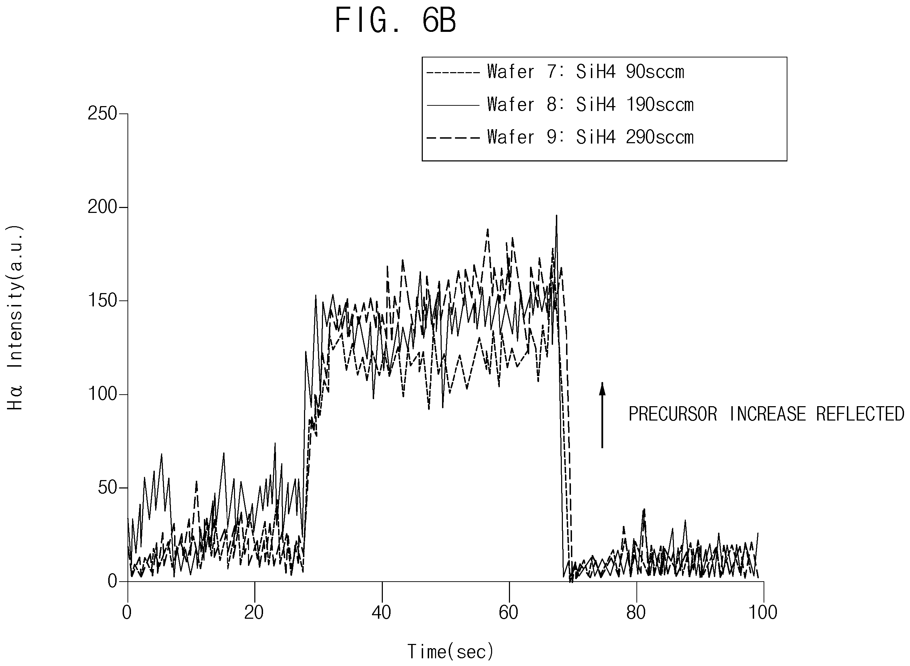

In this regard, FIG. 6A and FIG. 6B are graphs illustrating a state in which wavelength signals change when a flow rate of silane (SiH₄) gas is varied, through spectroscopy using the spectroscopy module of FIG. 2.

That is, in the case of FIG. 6A, when a flow rate of silane (SiH₄) gas is varied, a result of measuring a change in an H-alpha signal according to the variation in the flow rate of the silane gas through the first spectrometer 110 is illustrated.

In contrast, in the case of FIG. 6B, when a flow rate of silane (SiH₄) gas is varied, a result of measuring a change in an H-alpha signal according to the variation in the flow rate of the silane gas through the second spectrometer 120 is illustrated.

Referring to FIG. 6A, in the case of the first spectrometer 110, since a nitrogen (N₂) signal having a fixed flow rate is measured as an overlapped value, it may be confirmed that there is a limitation in that a variation in an amount of hydrogen (H) included in the silane gas having a variable flow rate is not reflected.

However, referring to FIG. 6B, in the case of the second spectrometer 120, particularly the second spectrometer 120 including, as the filter unit 130, an ultra-narrow band filter that transmits only an H-alpha wavelength band as described above, it may be confirmed that a change in intensity of an H emission signal according to a change in a flow rate of a precursor including H may be measured more accurately. That is, it may be confirmed that an H-alpha signal increases as the flow rate of the precursor increases from 90 sccm to 290 sccm.

That is, when spectroscopy is additionally performed using the second spectrometer 120 as in the present example embodiment, spectroscopy between adjacent signals may be effectively performed, and accordingly, a change in intensity of a specific signal may also be clearly measured.

As described above, when optical signals of the first and second wavelength bands are received through the spectroscopy module 100, the detection unit 200 detects optical signals according to specific frequency bands.

That is, referring to FIG. 2 and FIG. 3, based on the optical signals received by the spectroscopy module 100, the detection unit 200 detects optical signals according to respective frequency bands (S40).

In this case, detection of optical signals in the detection unit 200 selectively detects necessary signals or information in consideration of targets to be determined in the subsequent diagnosis unit 300, and this will be described in detail as follows.

First, the first optical signal detection unit 210 of the detection unit 200 detects both optical signals in ultraviolet, visible, and infrared wavelength bands received from the first spectrometer 110 and optical signals in ultraviolet and visible wavelength bands received from the second spectrometer 120 (S41).

That is, the first optical signal detection unit 210 acquires information on an optical signal spectrum, that is, information on intensities of optical signals for respective wavelengths, with respect to optical signals of all wavelength bands detected through the spectroscopy module 100, and thus acquires information on characteristics of the optical signals themselves within a monitored wavelength range.

Accordingly, information detected by the first optical signal detection unit 210 is provided to the process determination unit 310 described below.

In addition, the second optical signal detection unit 220 of the detection unit 200 detects whether optical signals in ultraviolet and visible wavelength bands received from the first spectrometer 110 are shifted relative to optical signals in ultraviolet and visible wavelength bands received from the second spectrometer 120, based on the optical signals in ultraviolet and visible wavelength bands received from the first spectrometer 110 and the optical signals in ultraviolet and visible wavelength bands received from the second spectrometer 120 (S42).

Information on a shift of the optical signals in the ultraviolet and visible wavelength bands detected by the second optical signal detection unit 220 is provided to the calibration determination unit 320 described below.

Furthermore, the third optical signal detection unit 230 of the detection unit 200 detects transmittance of optical signals in ultraviolet and visible wavelength bands received from the first spectrometer 110 and transmittance of optical signals in ultraviolet and visible wavelength bands received from the second spectrometer 120 (S43).

As described above, in the case of the second spectrometer 120, although optical signals in an ultraviolet wavelength band are received, optical signals in a visible wavelength band may also be selectively received, and the optical signals in the visible wavelength band thus received are detected through the third optical signal detection unit 230.

Accordingly, information on optical signals in the visible and ultraviolet wavelength bands detected by the third optical signal detection unit 230, that is, information on optical signals in a wavelength band commonly acquired by the first spectrometer 110 and the second spectrometer 120, is provided to the replacement determination unit 300.

As described above, through the detection unit 200, optical signals in necessary wavelength bands are selectively detected from among optical signals in wavelength bands received by the spectroscopy module 100, and detected information is provided to the diagnosis unit 300.

Accordingly, referring to FIG. 2 and FIG. 3, the diagnosis unit 300 performs required determinations based on optical signals in respective wavelength bands detected through the detection unit 200 (S50).

In this case, specific determination contents in the diagnosis unit 300 will be described as follows.

First, the process determination unit 310 determines an end time of the plasma process based on optical signals detected by the first optical signal detection unit 210 (S51).

That is, the first optical signal detection unit 210 detects optical signals in ultraviolet, visible, and infrared wavelength bands received through the first spectrometer 110, and at the same time detects optical signals in ultraviolet and visible wavelength bands received through the second spectrometer 120. In this case, the second spectrometer 120 may detect optical signals in a specific ultra-narrow band as described above.

Accordingly, the process determination unit 310 may identify information on components of gases included in the plasma emission optical signal 20 from characteristics of optical signals over an entire wavelength band of ultraviolet, visible, and infrared, that is, characteristics of intensities of optical signals for respective wavelengths.

In particular, since characteristics of intensities of optical signals for specific wavelengths in an ultraviolet region in which sensitivity of the second spectrometer 120 is high may be more accurately acquired, a spectroscopy effect between adjacent optical signals is improved, and thus information on components of gases included in the plasma emission optical signal 20 may be more accurately identified.

Accordingly, the process determination unit 310 may identify characteristics such as types and intensities of gases in the currently generated plasma process based on characteristics of intensities of optical signals for respective wavelengths, and may determine an end time of the plasma process based thereon.

Of course, the process determination unit 310 may acquire information on a progress state of the plasma process in addition to the end time of the plasma process, but since the end time is particularly important in the process, determining the end time of the plasma process may be most important.

In addition, the calibration determination unit 320 determines an alignment calibration timing, which is a timing at which calibration for alignment of the first spectrometer 110 is required, based on information on a shift state of optical signals detected by the second optical signal detection unit 220 (S52).

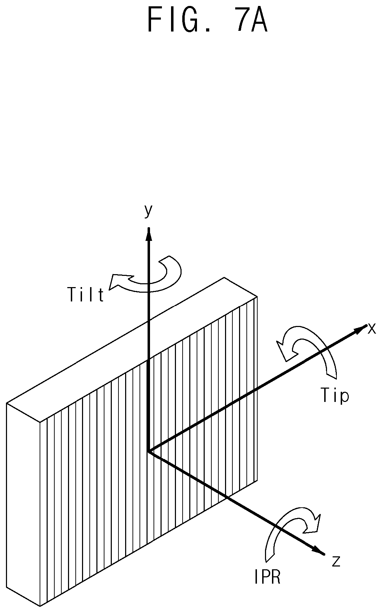

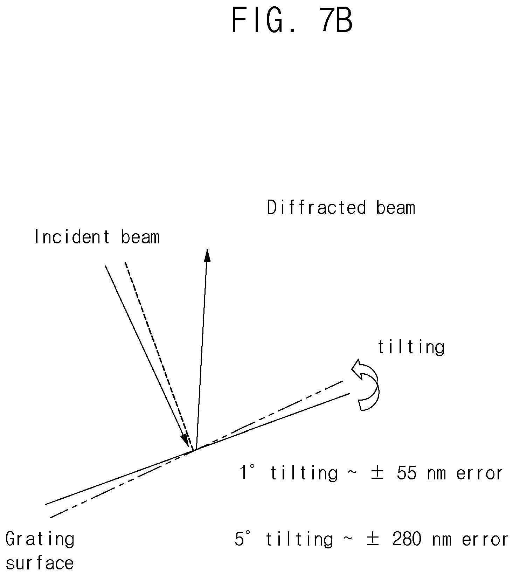

In this regard, FIG. 7A and FIG. 7B are schematic diagrams for explaining a wavelength shift state of an optical signal according to an alignment error of the first spectrometer of FIG. 2.

As illustrated in FIG. 7A, when an alignment error occurs in the first spectrometer 110 in at least one of first to third directions X, Y, and Z, a problem occurs in that, as illustrated in FIG. 7B, a received wavelength is relatively largely shifted in both directions of a long wavelength and a short wavelength.

In contrast, in the case of the second spectrometer 120, when an incident angle is varied due to an alignment error between a lens, a transmission filter, and a detector constituting the second spectrometer 120, a wavelength of an observed optical signal is only slightly shifted toward a short wavelength side, as in Equation (1) below.
${λ}_{θ} = {λ}_{0} {\left[1-\frac{{n}_{0}}{{n}_{∗}}{sin}^{2}θ\right]}^{1 / 2}$ Equation (1)

In this case, λ_{θ} denotes a wavelength of an optical signal incorrectly measured due to an alignment error, λ₀ denotes an original optical signal wavelength, n₀ denotes a refractive index of an optical signal transmission medium (air), n_{*} denotes a refractive index of a band-pass filter, and θ denotes an alignment error angle.

That is, in Equation (1), assuming a case in which an alignment error of 1 degree occurs with respect to an optical signal having a wavelength of 500 nm, an amount of wavelength shift is only 0.05 nm, and thus it may be confirmed that a wavelength shift due to an alignment error in the second spectrometer 120 is significantly smaller than a wavelength shift due to an alignment error in the first spectrometer 110.

Accordingly, the calibration determination unit 320 may determine that alignment of the first spectrometer 110 needs to be calibrated when a wavelength of an optical signal is shifted, relative to a wavelength of an optical signal observed at an initial installation, with respect to signals in visible and ultraviolet wavelength bands commonly detected in the first spectrometer 110 and the second spectrometer 120.

Such a wavelength shift of the optical signal is not caused by the second spectrometer 120, but is caused by the first spectrometer 110.

Thus, when the wavelength of the optical signal is shifted by a preset shift amount or more, it is determined that alignment calibration of the first spectrometer 110 is required, and calibration of an alignment state of the first spectrometer 110 is performed.

Furthermore, the replacement determination unit 330 determines a replacement timing of the window 30 based on transmittance of optical signals detected by the third optical signal detection unit 230 (S53).

That is, based on transmittance of optical signals in visible and ultraviolet wavelength bands received from the first spectrometer 110 and transmittance of optical signals in visible and ultraviolet wavelength bands received from the second spectrometer 120, which are detected through the third optical signal detection unit 230, a replacement timing of the window 30 is determined.

As described above, the window 30 is a window through which the plasma emission optical signal 20 passes and is provided to the spectroscopy module 100, and should have high transparency for effective transmission of the emission optical signal 20.

However, as the plasma process continues, the window 30 may be contaminated, and due to such contamination, transmittance of the emission optical signal 20 provided through the window 30, that is, intensity of light, may decrease.

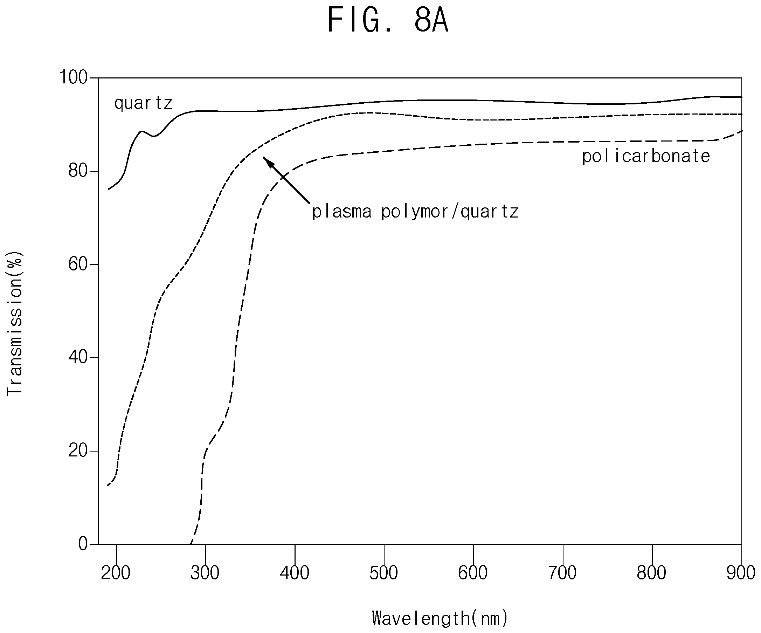

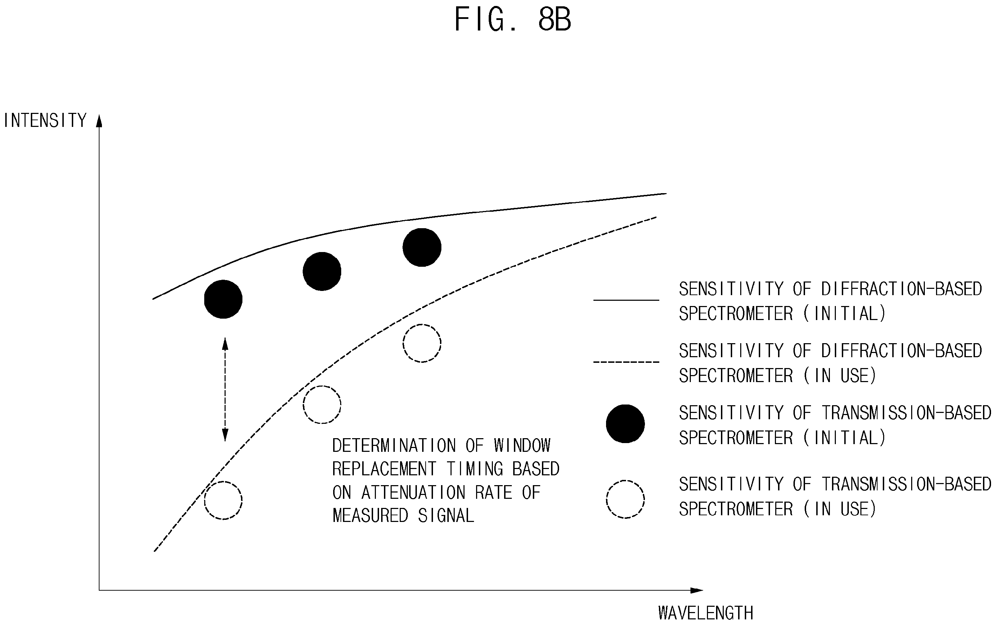

In this regard, FIG. 8A is a graph illustrating a state of change in transmittance for each wavelength due to contamination of the window of FIG. 2, and FIG. 8B is a graph for explaining a replacement timing of the window based on a change in sensitivity of the spectroscopy module of FIG. 2.

That is, referring to FIG. 8A, as the window 30 is contaminated, it may be confirmed that a rapid change in transmittance occurs in a relatively short wavelength range of 200 nm to 500 nm. This is a phenomenon that occurs in common in both the first spectrometer 110 and the second spectrometer 120. In the case of contamination of the window 30, organic or inorganic materials are deposited on a surface of the window made of quartz, and as illustrated in FIG. 8A, it may be confirmed that a tendency in which a long wavelength signal decreases relative to a short wavelength occurs through a rapid change in transmittance in a relatively short wavelength range.

Accordingly, since a change in transmittance due to contamination of the window occurs in both the first spectrometer 110 and the second spectrometer 120, in order to more accurately obtain a tendency in which a long wavelength signal decreases relative to a short wavelength, it is necessary to acquire optical signals in a wavelength band including visible light as well as ultraviolet light, which is a short wavelength range, through the second spectrometer 120.

Thus, by simultaneously using transmittance obtained from the first spectrometer 110, which has already acquired optical signals over all wavelength bands, and transmittance obtained through the second spectrometer 120, it is possible to more accurately identify the tendency in which a long wavelength signal decreases relative to a short wavelength as illustrated in FIG. 8A.

That is, as illustrated in FIG. 8B, by simultaneously monitoring a state of change in transmittance in ultraviolet and visible wavelength bands obtained from the first spectrometer 110 and a state of change in transmittance in ultraviolet and visible wavelength bands obtained from the second spectrometer 120, the replacement determination unit 330 determines a replacement timing of the window 30 based on a contamination state of the window 30.

Thus, when the transmittance according to a preset criterion for a contamination state of the window 30 becomes lower than a predetermined level, replacement of the window 30 is performed.

Meanwhile, reception of optical signals through the first spectrometer 110 may be performed through an optical fiber, and only reception of optical signals through the second spectrometer 120 may be performed through the window 30.

In this case, by comparing a difference between transmittance of optical signals received from the first spectrometer 110 and transmittance of optical signals received from the second spectrometer 120 from a start of measurement, it is also possible to determine a replacement timing of the optical fiber or a replacement timing of the window.

That is, when transmittance of optical signals received from the first spectrometer 110 becomes lower than transmittance of optical signals received from the second spectrometer 120, it may be determined that replacement of the optical fiber is required, and in contrast, in an opposite case, it may be determined that replacement of the window is required.

As described above, through the diagnosis unit 300, by selectively utilizing information on optical signals detected by the detection unit 200, it is possible to determine various states of the plasma process, in particular, an end timing, a calibration timing of the first spectrometer 110, and furthermore a replacement timing of the window 30. In addition, it is also possible to determine a replacement timing of an optical fiber in consideration of a connection state of the first spectrometer 110.

According to the present example embodiments, by simultaneously using a first spectrometer that performs diffraction spectroscopy and a second spectrometer that performs transmission spectroscopy, optical signals may be detected using the first spectrometer in a visible (VIS) to infrared (IR) wavelength band, and optical signals may be detected using the second spectrometer in an ultraviolet (UV) to visible (VIS) wavelength band, thereby enabling detection of optical signals over an entire band with high sensitivity and reliability.

Accordingly, it is possible to overcome a limitation in resolution of the first spectrometer in a region in which adjacent optical signals are present, such as an ultraviolet band or metal atom emission signals, and thus more accurate and reliable spectroscopic detection of optical signals may be achieved.

In particular, the second spectrometer may include a filter unit capable of transmitting only wavelengths of a specific band, thereby selectively acquiring optical signals in a specific wavelength band to be monitored.

Accordingly, through spectroscopic detection of optical signals over the entire band as described above as well as detection of optical signals in a specific wavelength band, an end timing of a plasma process may be determined more accurately and with higher reliability.

In addition, since the first spectrometer has a tendency in which a wavelength is shifted due to the presence of an alignment error, when a wavelength of an optical signal received through the first spectrometer is relatively largely shifted with respect to a specific wavelength band commonly observable by the first spectrometer and the second spectrometer, it may be determined as a calibration timing of the first spectrometer, and calibration of the spectroscopy module may be performed.

Furthermore, when a plasma emission optical signal is received through a window, transmittance of the received optical signal decreases due to contamination of the window, and since such a decrease in transmittance of the optical signal occurs in common in both the first spectrometer and the second spectrometer, a replacement timing of the window may be determined by monitoring the same.

Accordingly, in monitoring a plasma process state, not only accurate determination of an end timing of the process but also information on an alignment state of the spectroscopy module and a contamination state of the window may be simultaneously monitored, thereby further improving accuracy and reliability of determination of the end timing of the process.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A spectroscopy system comprising:
a spectroscopy module configured to receive an optical signal emitted from a plasma process;
a detection unit configured to detect an optical signal according to a frequency band based on the optical signal received by the spectroscopy module; and
a diagnosis unit configured to determine a state of the plasma process or determine a calibration timing of the spectroscopy module based on the detected optical signal,
wherein the spectroscopy module comprises:
a first spectrometer configured to receive an optical signal of a first wavelength band by performing diffraction spectroscopy; and
a second spectrometer configured to receive an optical signal of a second wavelength band by performing transmission spectroscopy.

2. The spectroscopy system of claim 1, wherein the optical signal of the first wavelength band is an optical signal in ultraviolet (UV), visible (VIS), and infrared (IR) wavelength bands, and the optical signal of the second wavelength band is an optical signal in ultraviolet (UV) and visible (VIS) wavelength bands.

3. The spectroscopy system of claim 2, wherein the detection unit comprises a first optical signal detection unit configured to detect optical signals in ultraviolet, visible, and infrared wavelength bands received from the first spectrometer and optical signals in ultraviolet and visible wavelength bands received from the second spectrometer.

4. The spectroscopy system of claim 3, wherein the diagnosis unit comprises a process determination unit configured to determine an end timing of the plasma process based on optical signals detected by the first optical signal detection unit.

5. The spectroscopy system of claim 2, wherein the second spectrometer further comprises a filter unit configured to selectively transmit only wavelengths of a specific band belonging to the ultraviolet (UV) and visible (VIS) wavelength bands.

6. The spectroscopy system of claim 2, wherein the detection unit comprises a second optical signal detection unit configured to detect whether optical signals in ultraviolet and visible wavelength bands received from the first spectrometer are shifted relative to optical signals in ultraviolet and visible wavelength bands received from the second spectrometer.

7. The spectroscopy system of claim 6, wherein the diagnosis unit comprises a calibration determination unit configured to determine an alignment calibration timing of the first spectrometer based on a shift state of optical signals detected by the second optical signal detection unit.

8. The spectroscopy system of claim 2, further comprising:
a window disposed between a process chamber in which the plasma process is performed and the spectroscopy module, through which the optical signal emitted from the plasma process is transmitted.

9. The spectroscopy system of claim 8, wherein the detection unit comprises a third optical signal detection unit configured to detect transmittance of optical signals in ultraviolet and visible wavelength bands received from the first spectrometer and transmittance of optical signals in ultraviolet and visible wavelength bands received from the second spectrometer.

10. The spectroscopy system of claim 9, wherein the diagnosis unit comprises a replacement determination unit configured to determine a replacement timing of the window based on transmittance of optical signals detected by the third optical signal detection unit.

11. The spectroscopy system of claim 8, wherein the first spectrometer is configured to receive the optical signal through an optical fiber, and the second spectrometer is configured to receive the optical signal through the window.

12. The spectroscopy system of claim 11, wherein a replacement timing of the optical fiber or a replacement timing of the window is determined by comparing a difference between transmittance of the optical signal received from the first spectrometer and transmittance of the optical signal received from the second spectrometer.

13. A method for process diagnosis, the method comprising:
receiving an optical signal emitted from a plasma process through a spectroscopy module;
detecting an optical signal according to a frequency band based on the received optical signal; and
determining a state of the plasma process or determining a calibration timing of the spectroscopy module based on the detected optical signal,
wherein the spectroscopy module comprises:
a first spectrometer configured to receive an optical signal of a first wavelength band by performing diffraction spectroscopy; and
a second spectrometer configured to receive an optical signal of a second wavelength band by performing transmission spectroscopy.

14. The method for diagnosing a process of claim 13, wherein, in the determining of the state of the plasma process, an end timing of the plasma process is determined based on optical signals for respective wavelength bands of the detected optical signal.

15. The method for diagnosing a process of claim 13, wherein the detected optical signal includes optical signals in ultraviolet, visible, and infrared wavelength bands received from the first spectrometer and optical signals in ultraviolet and visible wavelength bands received from the second spectrometer.

16. The method for diagnosing a process of claim 13, wherein, in the determining of the calibration timing of the spectroscopy module, an alignment calibration timing of the first spectrometer is determined based on a state in which an optical signal received from the first spectrometer is shifted relative to an optical signal received from the second spectrometer.

17. The method for diagnosing a process of claim 16, wherein the optical signals received from the first spectrometer and the second spectrometer are optical signals in ultraviolet and visible wavelength bands.

18. The method for diagnosing a process of claim 13, wherein the optical signal is received by the spectroscopy module through a window, and
the method further comprising: determining a replacement timing of the window based on transmittance of an optical signal received from the first spectrometer and transmittance of an optical signal received from the second spectrometer.

19. The method for diagnosing a process of claim 18, wherein the transmittance of the optical signals received from the first spectrometer and the second spectrometer is transmittance of optical signals in visible and ultraviolet wavelength bands.
